**Europäisches Patentamt**

**European Patent Office**

**Office européen des brevets**

(19)

(11) Veröffentlichungsnummer: **0 285 764
B1**

# (12) EUROPÄISCHE PATENTSCHRIFT

(45) Veröffentlichungstag der Patentschrift:
29.08.90

(51) Int. Cl.⁵: **B01J 49/00**

(21) Anmeldenummer: **88101747.9**

(22) Anmeldetag: **06.02.88**

(54) **Vorrichtung zur Solemengeneinstellung bei der Regeneration von Ionenaustauschern.**

(30) Priorität: **17.03.87 DE 3708669**

(43) Veröffentlichungstag der Anmeldung:
**12.10.88 Patentblatt 88/41**

(45) Bekanntmachung des Hinweises auf die Patenterteilung:
**29.08.90 Patentblatt 90/35**

(84) Benannte Vertragsstaaten:
**AT DE ES FR GB IT**

(56) Entgegenhaltungen:
**DE-A- 2 926 746
US-A- 4 421 652**

(73) Patentinhaber: **CILLIT WASSERTECHNIK GMBH & CO.,
Bottwarbahnstrasse 70, D-7100 Heilbronn(DE)**

(72) Erfinder: **Seibel, Heinrich, Dipl.-Ing. (FH),
Eichbrunnenweg 10,
D-7101 Hardthausen-Lampoldshausen(DE)**
Erfinder: **Weller, Horst, Lerchenstrasse 19,
D-7101 Neckarsulm(DE)**

(74) Vertreter: **Wolf, Eckhard, Patentanwalt Dr.-Ing. Eckhard
Wolf Postfach 13 10 01, D-7000 Stuttgart 1(DE)**

## Beschreibung

Die Erfindung betrifft eine Vorrichtung zur Solemengeneinstellung bei der Regeneration von Ionenaustauschern mit einem über eine Niveauregelung automatisch nachfüllbaren Vorratsbehälter für die Sole und einer unterhalb des Flüssigkeitspegels des Vorratsbehälters angeordneten, über eine an ihrem Boden oder in Bodennähe angeordnete Einlaßöffnung mit Sole beaufschlagbaren, mit einem Deckel verschließbaren und über eine verschließbare Auslaßöffnung mit dem Ionenaustauscher verbindbaren Zumeßkammer.

Es ist eine Vorrichtung dieser Art mit einem im Bereich des Deckels in die Zumeßkammer mündenden Rohr bekannt (US-A 4 421 652), bei der das Rohr zur Frischwasserversorgung der Zumeßkammer und zur Druckentlastung eines Ventils dient. Zur Be- und Entlüftung der Zumeßkammer ist dieses Rohr jedoch ungeeignet, da dort keine Luft in die Zumeßkammer eindringen darf, weil sie aufgrund der Eintauchtiefe des Rohrs nicht mehr aus der Zumeßkammer entfernt werden könnte und somit zu einer unkontrollierbaren Abnahme der zudosierten Solemenge führen würde. Bei der bekannten Vorrichtung erfolgt das Auffüllen der Zumeßkammer mit Sole zum einen unter der Einwirkung des hydrostatischen Flüssigkeitsdrucks im Vorratsbehälter, zum anderen jedoch auch unter Einwirkung des hydrostatischen Drucks der Frischwassersäule in der gefüllten Zumeßkammer. Das Frischwasser in der Zumeßkammer wird dabei von der von unten einströmenden schwereren Sole durch das in die Zumeßkammer mündende Rohr hindurch aus der Zumeßkammer verdrängt, jedoch nur so lange, bis die Sole die Öffnung des Rohrs erreicht. Das restliche, in der Zumeßkammer enthaltene Frischwasser wird aufgrund seines geringeren spezifischen Gewichts im oberen Teil der Zumeßkammer eingeschlossen und nur durch Diffusion mit Salz angereichert. Da dieser Diffusionsvorgang sehr langsam abläuft, kann die in der Zumeßkammer befindliche gelöste Salzmenge zu keinem Zeitpunkt genau bestimmt werden. Da die Zumeßkammer der bekannten Vorrichtung beim Regenerieren des Ionenaustauschers nicht entleert, sondern unter Verdrängung der Sole mit Frischwasser gefüllt wird, bleibt außerdem aufgrund der Vermischung von Frischwasser und Sole stets ein Teil des gelösten Salzes in der Zumeßkammer zurück. Bei dieser Art der Solezumessung treten daher erhebliche Ungenauigkeiten auf.

Ausgehend hiervon liegt der Erfindung die Aufgabe zugrunde, die bekannte Vorrichtung der eingangs angegebenen Art dahingehend zu verbessern, daß eine genaue Zumessung und Regulierung der Sole gewährleistet ist,

Zur Lösung dieser Aufgabe wird die im Patentanspruch 1 angegebene Merkmalskombination vorgeschlagen. Weitere vorteilhafte Ausgestaltungen und Weiterbildungen des Erfindungsgedankens ergeben sich aus den abhängigen Ansprüchen.

Die Erfindung geht vor allem von dem Gedanken aus, daß mit einer beim Regenerationsvorgang entleerbaren und anschließend über den Vorratsbehälter mit Sole beschickbaren Zumeßkammer mit vorgegebenem Füllvolumen eine exakte Einstellung der beim Regenerationsvorgang benötigten Solemenge möglich ist. Demgemäß wird nach der Erfindung vorgeschlagen, daß die Zumeßkammer an ihrem Deckel oder in Deckelnähe ein über den Flüssigkeitspegel reichendes, zur Atmosphäre offenes Be- und Entlüftungsrohr aufweist, und daß die Zumeßkammer bei geöffneter Einlaßöffnung allein unter der Einwirkung des statischen Flüssigkeitsdrucks im Vorratsbehälter bis in den Bereich des Be- und Entlüftungsrohrs hinein mit Sole auffüllbar und bei geschlossener Einlaßöffnung über eine mit der Auslaßöffnung verbundene Absaugeinrichtung entleerbar ist. Beim Auffüllen der Zumeßkammer mit Sole wird die in der Zumeßkammer befindliche Luft über das offene Be- und Entlüftungsrohr verdrängt. Nach dem Prinzip der kommunizierenden Röhren dringt die Sole bis zum Niveauausgleich in das Be- und Entlüftungsrohr ein. Die in diesem Rohr befindliche variable Flüssigkeitsmenge kann jedoch im Vergleich zu der in der Zumeßkammer befindlichen definierten Flüssigkeitsmenge mengenmäßig vernachlässigt werden. Das Absaugen der Sole für die Regeneration des Ionenaustauschers erfolgt bei geschlossener Einlaßöffnung ausschließlich aus der Zumeßkammer und zwar so, daß der gesamte Inhalt der Zumeßkammer entleert wird. Die abgesaugte Solemenge ist daher sehr genau definiert. Durch ein mehr oder weniger tiefes Eintauchen des Be- und Entlüftungsrohrs von oben her in die Zumeßkammer kann die Füllmenge innerhalb gewisser Grenzen eingestellt werden.

Gemäß einer bevorzugten Ausgestaltung der Erfindung ist die Zumeßkammer innerhalb des Vorratsbehälters angeordnet. Der Vorratsbehälter kann dabei durch ein unterhalb des Flüssigkeitspegels angeordnetes, mit ungelöstem Salz, vorzugsweise Kochsalz, in Form von Körnern oder Tabletten beschickbares Sieb oder Lochblech in einem oberen Lösungsbereich und in einen unteren Solebereich unterteilt werden. Die Einlaßöffnung der Zumeßkammer sollte hier vorzugsweise über ein weiteres Sieb mit Sole aus dem unteren Solebereich beaufschlagt werden, während der Vorratsbehälter im oberen Lösungsbereich über eine automatische Niveauregelung mit Wasser nachfüllbar sein sollte.

Nach einer weiteren bevorzugten Ausgestaltung der Erfindung ist die Einlaßöffnung der Zumeßkammer durch ein Ventil verschließbar, dessen bewegliches Schließorgan über einen Stößel mit dem Schließorgan eines weiteren, im Durchlaß zwischen der Auslaßöffnung und einer zur Absaugeinrichtung führenden Absaugleitung angeordneten Ventils verbunden ist. Der Ventilstößel trägt nach der Erfindung ferner einen in einem Zylinder angeordneten Steuerkolben, der vorzugsweise über die Absaugleitung wahlweise mit Druckwasser beaufschlagbar und dabei entgegen der Kraft einer Feder in Öffnungsrichtung des Einlaßventils und in Schließrichtung des Auslaßventils oder unter der Einwirkung des Absaugdrucks durch die überwiegende Federkraft in Schließrichtung des Einlaßventils und in Öffnungsrichtung des Auslaßventils verschiebbar ist. Vorteilhafterweise weist der Steuerkolben eine vom Zylinder zur Auslaßöffnung der Zumeßkammer führende, beim Verschieben des Steuerkolbens entgegen der Federkraft durch das Auslaßventil verschließbare Durchlaßbohrung auf. Der Zylinder ist vorzugsweise unterhalb der Einlaßöffnung und der Auslaßöffnung der Zumeßkammer angeordnet und weist eine unterhalb des Steuerkolbens an seinem Boden angeordnete, zur Absaugleitung führende Öffnung auf, die durch einen im Zylinder befindlichen, in der Sole schwimmfähigen, vorzugsweise kugelförmigen Schließkörper verschließbar ist.

Zweckmäßig ist die Einlaßöffnung mittig am Boden der zylinderförmigen Zumeßkammer angeordnet, während die Auslaßöffnung die Einlaßöffnung ringförmig umgibt. Vorzugsweise weist die Zumeßkammer einen Bodenstutzen auf, an welchem eine die Ein- und Auslaßöffnung mit den zugehörigen Ventilen, den Zylinder mit Steuerkolben, Feder und Schließkörper sowie einen Anschluß für die Absaugleitung enthaltende Armatur befestigbar, vorzugsweise anschraubbar oder anflanschbar ist.

Gemäß einer vorteilhaften Weiterbildung der Erfindung sind zur Niveauregelung drei Elektroden von oben her in den Vorratsbehälter eingetaucht, von denen die am tiefsten eintauchende Elektrode als Bezugselektrode und die beiden anderen unterschiedlich tief eintauchenden Elektroden als Meßelektroden zur Bestimmung des Stromdurchgangs zur Bezugselektrode ausgebildet sind. Die Meßelektrode mit der geringeren Eintauchtiefe bildet dabei eine Sonde für die Erkennung des oberen Flüssigkeitspegels beim Nachfüllen des Vorratsbehälters, während die andere Meßelektrode eine Sonde für die Salzstandserkennung nach dem Entleeren der Zumeßkammer bildet. Die Elektroden befinden sich in einem mit dem Vorratsbehälter kommunizierenden, gegen Zutritt von festem Salz geschlossenen Elektrodengehäuse, das an der Oberseite des Zumeßkammerdeckels angeordnet sein kann. Auch das Be- und Entlüftungsrohr kann sich durch das Elektrodengehäuse hindurch in den oberhalb des Flüssigkeitspegels im Vorratsbehälter befindlichen Luftraum erstrecken.

Gemäß einer weiteren vorteilhaften Weiterbildung der Erfindung ist die von der Zumeßkammer kommende Absaugleitung an die Ansaugkammer eines eingangsseitig mit Druckwasser beaufschlagten und ausgangsseitig vorzugsweise über einen Rückflußverhinderer zum Ionenaustauscher führenden Injektor angeschlossen, dessen Ausgang zusätzlich über eine Bypassleitung mit einstellbarem Strömungsquerschnitt zur Ansaugkammer rückgekoppelt ist. Damit kann die Saugleistung des Injektors den Anschlußbedingungen einer konkreten Ionenaustauscheranlage und dabei insbesondere dem am Injektorausgang anstehenden Gegendruck so angepaßt werden, daß eine vorgegebene Regenerationszeit eingehalten werden kann. Zur Einstellung des Strömungsquerschnitts kann in der Bypassleitung ein in seinem Hub einstellbares Ventil, vorzugsweise ein Kegelventil angeordnet werden. Der Strömungsquerschnitt in der Bypassleitung ist vorzugsweise nach Maßgabe des statischen Flüssigkeitsdrucks am Injektoraustritt oder nach Maßgabe der Druckdifferenz zwischen Injektoreintritt und Injektoraustritt oder nach Maßgabe einer vorgegebenen Saugleistung in der Saugleitung von Hand oder automatisch verstellbar.

Im folgenden wird die Erfindung anhand des in der Zeichnung in schematischer Weise dargestellten Ausführungsbeispiels näher erläutert. Es zeigen

Fig. 1 einen Sole-Vorratsbehälter mit Zumeßeinrichtung und Niveauregelung in senkrecht geschnittener Darstellung;

Fig. 2 eine an die Zumeßeinrichtung nach Fig. 1 anschließbare und zu einem Ionenaustauscher führende Absaugeinrichtung in teilweise geschnittener Darstellung.

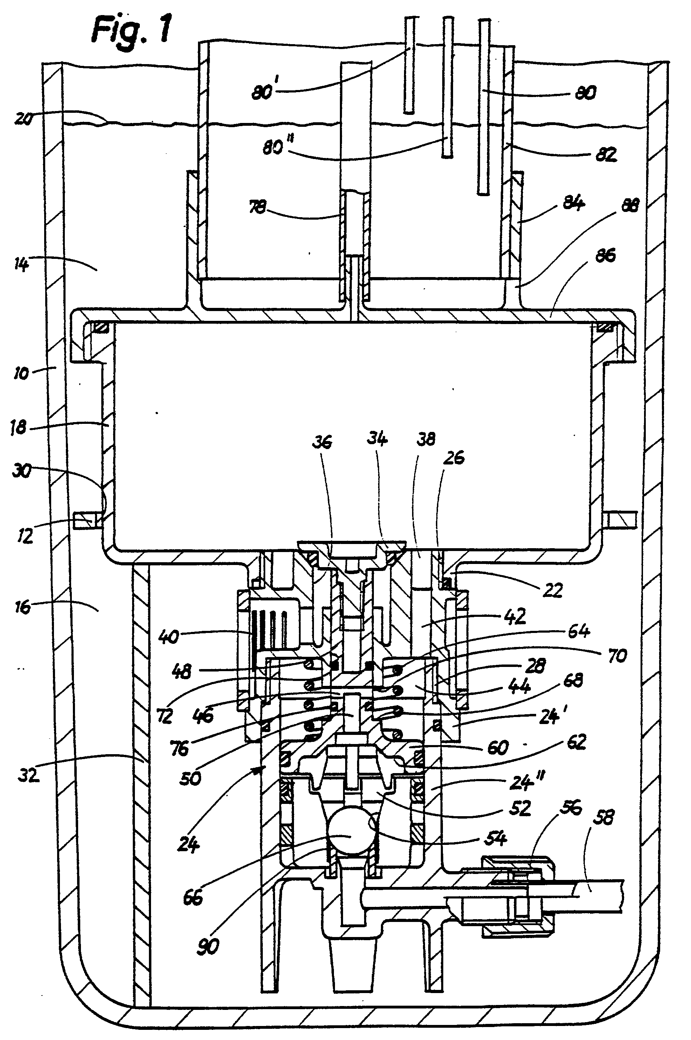

Der in Fig. 1 dargestellte Vorratsbehälter 10 ist durch ein Lochblech 12 in einen oberen Lösungsbereich 14 und einen unteren Solebereich 16 unterteilt. Auf dem Lochblech wird festes Salz, beispielsweise Kochsalz, in Form von Tabletten oder Körnern aufgeschichtet, das durch von oben in den Behälter eingefülltes oder nachgefülltes Wasser allmählich unter Bildung einer konzentrierten wässrigen Lösung, der sogenannten Sole, gelöst wird.

In dem Vorratsbehälter 10 befindet sich ferner eine zylindrische Zumeßkammer 18, die vollständig unter dem Flüssigkeitspegel 20 des Vorratsbehälters angeordnet ist. Im Boden der Zumeßkammer 18 befindet sich ein nach unten weisender Schraubstutzen 22, in dessen Innengewinde 26 von unten her eine aus einem Oberteil 24' und einem Unterteil 24" bestehende Armatur 24 eingeschraubt ist. Die Teile 24' und 24" sind ihrerseits an einer Schraubverbindung 28 miteinander verbunden. Der Stutzen 22 und die Armatur 24 sind durch eine Öffnung 30 im Lochblech 12 hindurch vollständig in den unteren Solebereich 16 des Vorratsbehälters eingetaucht und sind über mehrere Stützen 32 auf dem Boden des Vorratsbehälters abgestützt.

Die Armatur 24 bildet an ihrem oberen, zum Inneren des Zumeßbehälters 18 weisenden stirnseitigen Ende eine durch ein Schließorgan 34 verschließbare Einlaßöffnung 36 und die die Einlaßöffnung 36 ringförmig umgebende Auslaßöffnung 38. Die Einlaßöffnung 36 ist über mindestens eine am Umfang der Armatur 34 angeordnete Sieböffnung 40 mit Sole aus dem Vorratsbehälter 10 beaufschlagt, während die Auslaßöffnung 38 über den Kanal 42, den oberen Zylinderraum 44, eine Querbohrung 46 im Stößel 48 und eine Axialbohrung 50 mit der unteren Zylinderkammer 52 verbunden ist. Die Zylinderkammer 52 führt durch den Ventilsitz 54 hindurch zu einem Stutzen 56 für den Anschluß einer Absaugleitung 58.

Der Stößel 48 trägt an seinem dem Schließorgan 34 gegenüberliegenden Ende einen in den Zylinderraum 52 weisenden Steuerkolben 60, dessen Kolbenfläche 62 von der Absaugleitung 58 her entweder mit Druckwasser vom Wassernetz oder mit dem niedrigeren Absaugdruck beaufschlagbar ist, und auf dessen Rückseite eine in der oberen Zylinderkammer 44 angeordnete Druckfeder 64 einwirkt. In der in Fig. 1 gezeigten Stellung befindet sich der Steuerkolben 60 in seiner unter der Einwirkung der Druckfeder 64 nach unten verschobenen Endstellung, in der das Schließorgan 34 die Einlaßöffnung 36 verschließt und die Querbohrung 46 zur Zylinderkammer 44 hin offen ist. Wird nun über die Absaugleitung 58 von unten her Druckwasser zugeführt, so hebt sich zunächst der Schwimmerkörper 66 von seinem Ventilsitz 54 ab und gibt dabei den Wasserdurchtritt zum unteren Zylinderraum 52 frei. Unter der Einwirkung des Druckwassers wird nun der Steuerkolben 60 entgegen der Kraft der Feder 64 angehoben, bis der Bund 68 auf der Rückseite des Kolbens gegen die Schulter 70 im Oberteil 24' anschlägt. In dieser Endstellung befindet sich die Querbohrung 46 im Inneren der Hülse 72 und ist zum oberen Zylinderraum 44 hin durch den einen Schließkörper bildenden O-Ring 76 so abgedichtet, daß der Durchlaß von der Auslaßöffnung 38 zur Absaugleitung 58 unterbrochen ist. Weiter hebt sich der Schließkörper 34 von seinem Sitz ab und gibt dabei die Einlaßöffnung 36 für den Durchtritt von Sole von der Öffnung 40 her frei. Dadurch kann sich der Zumeßbehälter unter der Einwirkung des statischen Flüssigkeitsdrucks innerhalb des Vorratsbehälters von unten her mit Soleflüssigkeit füllen. Die im Zumeßbehälter 18 befindliche Luft wird dabei über das in den Luftraum des Vorratsbehälters reichende und gegen Atmosphärendruck offene Be- und Entlüftungsrohr 78 verdrängt. Die Sole füllt schließlich den gesamten Zumeßbehälter und gelangt noch ein Stück weit in das Be- und Entlüftungsrohr hinein bis zum Niveauausgleich mit dem Vorratsbehälter 10.

Während des Befüllens der Zumeßkammer sinkt der Flüssigkeitspegel 20 im Vorratsbehälter 10 etwas ab und kann durch Zufuhr von Frischwasser, das zweckmäßig von oben her eingeführt wird, wieder auf den Sollpegel angehoben werden. Zur Niveauregelung und zur Erkennung des Salzstandes im Vorratsbehälter sind drei Elektroden 80, 80' und 80" vorgesehen, die von oben her verschieden tief in den Vorratsbehälter eintauchen. Die Elektroden sind in einem Gehäuse 82 angeordnet, das in eine Halterung 84 am Deckel 86 der Zumeßkammer 18 von oben her eingesteckt ist und über eine Öffnung 88 in Deckelnähe, mit der Behälterflüssigkeit kommuniziert. Die Öffnung 88 ist so klein bemessen, daß kein Festsalz von außen her in das Gehäuse 82 eindringen kann.

Die am tiefsten eintauchende Elektrode 80 ist die Bezugs- bzw. Masseelektrode, während die beiden Elektroden 80' und 80" Meßelekroden sind, an denen aufgrund des Stromdurchgangs zur Bezugselektrode 80 festgestellt werden kann, ob sie in die Behälterflüssigkeit eintauchen oder nicht. Über die Elektrode 80' wird beim Nachfüllen von Frischwasser das Erreichen des obersten Flüssigkeitspegels festgestellt. Nach dem Entleeren des Zumeßbehälters kann aufgrund des Verdrängungsprinzip festgestellt werden, ob noch genügend festes Salz im Vorratsbehälter vorhanden ist oder nicht: Wenn von beiden Elektroden 80' und 80" kein Strom zur Bezugselektrode fließt, ist noch genügend Salz vorhanden. Wird dagegen von der Elektrode 80" aus ein Stromdurchgang festgestellt, so muß Salz nachgefüllt werden.

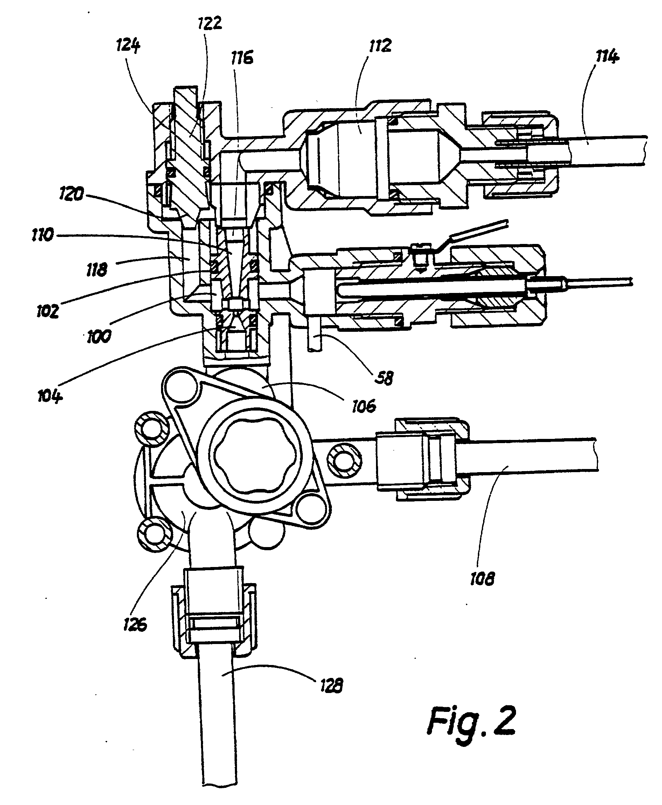

Das Entleeren des Zumeßbehälters erfolgt durch Absaugen über die Absaugleitung 58 mit Hilfe der in Fig. 2 gezeigten Absaugvorrichtung, die weiter unten noch näher erläutert wird. Steht in der Kammer 52 der niedrigere Absaugdruck an, so wird der Kolben 60 unter der Einwirkung der nunmehr überwiegenden Kraft der Feder 64 in seine untere in Fig. 1 gezeigte Endstellung verschoben, in der die Einlaßöffnung 36 durch das Schließorgan 34 verschlossen und der Durchgang von der Auslaßöffnung 38 über die Querbohrung 46 zur Auslaßöffnung 58 geöffnet wird. Solange in der unteren Zylinderkammer 52 sich noch Sole befindet, bleibt der schwimmende Schließkörper 66 von der Ventilöffnung 54 abgehoben, so daß die Sole zur Absaugleitung 58 gelangen kann. Erst wenn bei vollständig entleerter Zumeßkammer Luft in den Zylinderraum 52 gelangt, senkt sich der Schließkörper 66 auf die Ringdichtung 90 ab und verhindert dadurch, daß über die Leitung 58 nunmehr Luft angesaugt wird.

Wie aus Fig. 2 ersichtlich ist, wird die Sole aus der Zumeßkammer 18 mit Hilfe eines Injektors 2 abgesaugt, der an seiner Treibdüse 104 über einen Druckregler 106 mit Druckwasser aus dem Wassernetz 108 beaufschlagt wird und dessen Fangdüse 110 ausgangsseitig über einen Rückstoßverhinderer 112 mit einer zum nicht dargestellten Ionenaustauscher führenden Leitung 114 verbunden ist. Die von der Zumeßkammer kommende Absaugleitung 58 mündet in die Ansaugkammer 100 des Injektors, über die die Sole aus der Leitung 58 angesaugt und dem Treibwasser beigemischt wird. Der Ausgang 116 des Injektors ist zusätzlich über einen Bypass 118 mit der Ansaugkammer 100 verbunden. Der Durchlaßquerschnitt in der Bypassleitung 118 ist mit Hilfe eines Kegelventils 120 durch Drehen der Ventilspindel 122 in dem Gewinde 124 verstellbar. Dadurch kann die Saugleistung des Injektors den Anforderungen entsprechend eingestellt werden.

Der Absaugvorgang wird automatisch durch Auslösen des Regenerationsvorgangs im nicht dargestellten Ionenaustauscher dadurch eingeleitet, daß in der Leitung 114 ein Unterdruck gegenüber dem Netzdruck entsteht, der den Rückflußverhinderer 112 von seinem Sitz abhebt, so daß der Treibstrom durch den Injektor 102 einsetzen kann. Im Anschluß daran wird der zuvor gefüllte Zumeßbehälter allmählich entleert, bis der Schließkörper 66 aufgrund der eindringenden Luft den Durchtritt zur Absaugleitung 58 verschließt. In diesem Zustand wird der Ionenaustauscher nur noch mit Treibwasser beaufschlagt, das die vorhandene Sole aus dem Austauscherbett auswäscht. Am Ende des Regenerationsvorgangs, der mit Hilfe der beschriebenen Vorrichtung je nach Größe des Ionenaustauschers nur etwa 15 bis 30 Minuten benötigt, wird in der Leitung 114 wieder Netzdruck aufgebaut, der den Rückflußverhinderer 112 schließt und die Durchströmung des Injektors beendet. In diesem Zustand baut sich über die Kammer 100 Netzdruck in der Leitung 58 auf, der dazu führt, daß der Kolben 60 entgegen der Kraft der Feder 64 in seine obere Endstellung verschoben und das Befüllen der Zumeßkammer ausgelöst wird. Das Befüllen der Zumeßkammer dauert nur etwa 10 Sekunden. Das Nachfüllen von Frischwasser in den Vorratsbehälter erfolgt über das in Fig. 2 gezeigte Magnetventil 126 und die zum Vorratsbehälter geführte Wasserleitung 128.

**Patentansprüche**

1. Vorrichtung zur Solemengeneinstellung bei der Regeneration von Ionenaustauschern mit einem über eine Niveauregelung automatisch nachfüllbaren Vorratsbehälter für die Sole und einer unterhalb des Flüssigkeitspegels des Vorratsbehälters angeordneten, über eine an ihrem Boden oder in Bodennähe angeordnete Einlaßöffnung mit Sole beaufschlagbaren, mit einem Deckel verschließbaren und über eine verschließbare Auslaßöffnung mit dem Ionenaustauscher verbindbaren Zumeßkammer, dadurch gekennzeichnet, daß die Zumeßkammer (18) an ihrem Deckel oder in Deckelnähe ein über den Flüssigkeitspegel (20) reichendes, zur Atmosphäre offenes Be- und Entlüftungsrohr (78) aufweist, und daß die Zumeßkammer bei geöffneter Einlaßöffnung (36) allein unter der Einwirkung des statischen Flüssigkeitsdrucks im Vorratsbehälter (10) bis in den Bereich des Be- und Entlüftungsrohrs (78) hinein mit Sole auffüllbar und bei geschlossener Einlaßöffnung (36) über eine mit der Auslaßöffnung verbundene Absaugeinrichtung (102) entleerbar ist.

2. Vorrichtung nach Anspruch 1, dadurch gekennzeichnet, daß die Zumeßkammer (18) innerhalb des Vorratsbehälters (10) angeordnet ist.

3. Vorrichtung nach Anspruch 1 oder 2, dadurch gekennzeichnet, daß der Vorratsbehälter (10) durch ein unterhalb des Flüssigkeitspegels (20) angeordnetes, mit wasserlöslichem Salz, vorzugsweise Kochsalz beschickbares Sieb oder Lochblech (12) in einen oberen Lösungsbereich (14) und einen unteren Solebereich (16) unterteilt ist, daß die Einlaßöffnung (36,40) der Zumeßkammer vorzugsweise über ein weiteres Sieb mit Sole aus dem unteren Solebereich (16) beaufschlagt ist, und daß der Vorratsbehälter (10) über eine automatische Niveauregelung mit Wasser nachfüllbar ist.

4. Vorrichtung nach einem der Anspruche 1 bis 3, dadurch gekennzeichnet, daß die Einlaßöffnung (36) der Zumeßkammer (18) durch ein Ventil verschließbar ist, dessen Schließorgan (34) starr mit dem Schließorgan (76) eines weiteren, im Durchlaß (44,46) zwischen der Auslaßöffnung (38) und einer zur Absaugeinrichtung (102) führenden Absaugleitung (58) angeordneten Ventil (72,76) verbunden ist, und daß die Schließorgane (34,76) durch einen in einem Zylinder (44,52) angeordneten Steuerkolben (60) betätigbar sind, der vorzugsweise über die Absaugleitung (58) wahlweise mit Druckwasser beaufschlagbar und dabei entgegen der Kraft einer Feder (64) in Öffnungsrichtung des Einlaßventils (34,36) und in Schließrichtung des Auslaßventils (72,76) oder unter der Einwirkung eines niedrigeren Absaugdrucks durch die Kraft der Feder (64) in Schließstellung des Einlaßventils (34,36) und in Öffnungsstellung des Auslaßventils (72,76) verschiebbar ist.

5. Vorrichtung nach Anspruch 4, dadurch gekennzeichnet, daß der Steuerkolben (60) eine vom Zylinder (52) zur Auslaßöffnung (38) der Zumeßkammer (18) führende, beim Verschieben des Steuerkolbens (60) entgegen der Kraft der Feder (64) durch das Auslaßventil (72,76) verschließbare Durchlaßbohrung (50,46) aufweist.

6. Vorrichtung nach Anspruch 4 oder 5, dadurch gekennzeichnet, daß der Zylinder (52) unterhalb der Einlaßöffnung (36) und der Auslaßöffnung (38) der Zumeßkammer (18) angeordnet ist und eine unterhalb des Steuerkolbens (60) an ihrem Boden angeordnete, zur Absaugleitung (58) führende Öffnung (54) aufweist, die durch einen im Zylinder (52) angeordneten, in der Sole schwimmfähigen, vorzugsweise kugelförmigen Schließkörper (66) verschließbar ist.

7. Vorrichtung nach einem der Ansprüche 1 bis 6, dadurch gekennzeichnet, daß die Einlaßöffnung (36) mittig am Boden der zylindrischen Zumeßkammer (18) angeordnet ist, und daß die Auslaßöffnung (38) die Einlaßöffnung (36) ringförmig umgibt.

8. Vorrichtung nach einem der Ansprüche 1 bis 7, dadurch gekennzeichnet, daß die Zumeßkammer (18) einen Bodenstutzen (22) aufweist, an welchem eine die Ein- und Auslaßöffnung (36,38) mit den zugehörigen Ventilen (34;72,76), den Zylinder (44,52) mit Steuerkolben (60), Feder (64) und Schließkörper (66) und einen Anschluß (56) für die Absaugleitung (58) enthaltende Armatur befestigbar, vorzugsweise anschraubbar oder anflanschbar ist.

9. Vorrichtung nach einem der Ansprüche 1 bis 8, dadurch gekennzeichnet, daß das Be- und Entlüftungsrohr (78) mit seiner unteren Öffnung von oben her in die Zumeßkammer (18) eintauchbar ist.

10. Vorrichtung nach einem der Ansprüche 3 bis 9, dadurch gekennzeichnet, daß zur Niveauregelung drei Elektroden (80,80',80'') von oben her in den Vorratsbehälter (10) eintauchen, von denen die eine am tiefsten eintauchende Elektrode (80) als Bezugselektrode und die beiden anderen, unterschiedlich tief eintauchenden Elektroden (80',80'') als Meßelektroden zur Bestimmung eines Stromdurchgangs zur Bezugselektrode ausgebildet sind und wobei die Meßelektrode mit der geringeren Eintauchtiefe (80') eine Sonde für die Erkennung des oberen Flüssigkeitspegels (20) beim Nachfüllen des Vorratsbehälters (10) und die andere Meßelektrode (80'') eine Sonde für die Salzstanderkennung nach dem Entleeren der Zumeßkammer (18) bilden.

11. Vorrichtung nach einem der Ansprüche 3 bis 10, dadurch gekennzeichnet, daß die Elektroden (80,80',80'') in einem mit dem Solebereich des Vorratsbehälters kommunizierenden, gegen Zutritt von Festsalzteilchen geschlossenen Elektrodengehäuse (82) angeordnet sind.

12. Vorrichtung nach Anspruch 11, dadurch gekennzeichnet, daß das Elektrodengehäuse (82) an der Deckeloberseite der Zumeßkammer (18) angeordnet ist.

13. Vorrichtung nach Anspruch 12, dadurch gekennzeichnet, daß das Be- und Entlüftungsrohr (78) durch das Elektrodengehäuse (82) hindurchgreift.

14. Vorrichtung nach einem der Ansprüche 1 bis 13, dadurch gekennzeichnet, daß die von der Zumeßkammer (18) kommende Absaugleitung (58) an die Ansaugkammer (100) eines eingangsseitig (104) mit Druckwasser beaufschlagten und ausgangsseitig (116) vorzugsweise über einen Rückflußverhinderer (112) zum Ionenaustauscher führenden Injektor (102) angeschlossen ist, und daß zwischen dem Injektorausgang (116) und der Ansaugkammer (100) eine Bypassleitung (118) mit einstellbarem Strömungsquerschnitt angeordnet ist.

15. Vorrichtung nach Anspruch 14, dadurch gekennzeichnet, daß in der Bypassleitung ein in seinem Hub einstellbares Ventil, vorzugsweise ein Kegelventil (120) angeordnet ist.

16. Vorrichtung nach Anspruch 14 oder 15, dadurch gekennzeichnet, daß der Strömungsquerschnitt in der Bypassleitung (118) nach Maßgabe des statischen Flüssigkeitsdrucks am Injektoraustritt (116) oder der Druckdifferenz zwischen Injektoreintritt (104) und Injektoraustritt oder der Saugleistung in der Absaugleitung (58) von Hand oder automatisch regulierbar ist.

## Claims

1. A device for controlling the amount of brine in the regeneration of ion exchangers with a storage vessel for the brine, automatically replenishable by means of a level control, and a metering chamber, arranged below the liquid level of the storage vessel, to be filled with brine by way of an inlet opening at or near its bottom, to be closed by way of a lid and connectable with the ion exchanger by way of a closable outlet opening, characterised in that the metering chamber (18) has at or near its lid a ventilating- and bleeding pipe (78) which extends over the liquid level (10) and is open towards the atmosphere, and that the metering chamber with the inlet opening (36) open can be filled with brine solely under the influence of the static liquid pressure in the storage vessel (10) up to the area of the ventilating- and bleeding pipe (78), and that it can be emptied with the inlet opening (36) shut via a suction means (102) connected with the outlet opening.

2. Device according to claim 1, characterised in that the metering chamber (18) is arranged inside the storage vessel (10).

3. Device according to claim 1 or 2, characterised in that the storage vessel (10) can be divided into an upper solvent area (14) and a lower brine area (16) by way of a sieve or perforated metal sheet (12) arranged below the liquid level (20), filled with watersoluble salt, preferably cooking salt, that the inlet opening (36, 40) of the metering chamber is preferably loaded with brine from the lower brine area (16) via a further sieve, and that the storage vessel (10) can be refilled with water by way of an automatic level control.

4. Device according to one of the claims 1 to 3, characterised in that the inlet opening (36) of the metering chamber (18) can be closed by means of a valve, the closing member (34) of which is rigidly connected with the closing member (76) of a further valve (72, 766), arranged in the passage (44, 46) between the outlet opening (38) and an extraction pipe (58) leading to the extraction device (102), that the closing members (34, 76) are operated through a control piston (60) arranged in a cylinder (44, 52), which piston is selectively loaded preferably via the extraction pipe (58), with pressurised water and thus displaceable against the force of a spring (64) in the open direction of the inlet valve (34, 36) and in the closed direction of the outlet valve (72, 76) or under the influence of a lower extraction pressure by the force of the spring (64) in the closed direction of the inlet valve (34, 36) and the open direction of the outlet valve (72, 76).

5. Device according to claim 4, characterised in that the control piston (60) has a through bore (50, 46), leading from the cylinder (52) to the outlet opening (38) of the metering chamber (18), which can be closed by the outlet valve (72, 76) against the force of the spring (64) during displacement of the control piston (60).

6. Device according to claim 4 or 5, characterised in that the cylinder (52) is arranged underneath the inlet opening (36) and the outlet opening (38) of the metering chamber (18) and has an opening (54), arranged underneath the control piston (60) at its bottom, leading to the extraction pipe (58), which opening can be closed by a preferably ball-shaped closing member (66), disposed in the cylinder (52), floatable in the brine.

7. Device according to one of the claims 1 to 6, characterised in that the inlet opening (36) is arranged centrally at the bottom of the cylindrical metering chamber (18) and that the outlet opening (38) circularly embraces the inlet opening (36).

8. Device according to one of the claims 1 to 7, characterised in that the metering chamber (18) has a bottom socket (22) onto which is attached – preferably screwed or flanged – an armature containing the inlet- and outlet opening (36, 38) including the appertaining valves (34; 72, 76), the cylinder (44, 52) including control piston (60), spring (64) and closing member (66) and a connection (56) for the extraction pipe (58).

9. Device according to one of the claims 1 to 8, characterised in that the ventilating and bleeding pipe (78) is immerseable into the metering chamber (18) from the top with its lower opening.

10. Device according to one of the claims 3 to 9, characterised in that three electrodes (80, 80', 80''), serving as a level control, are immersed from the top into the storage vessel (10), of which the deepest immersed electrode (80) is constructed as a reference electrode, and the other two electrodes (80', 80'), immersed to different depths, are measuring electrodes to determine the current flow to the reference electrode, and whereby the measuring electrode (80') with the least immersion depth is a probe for reading of the upper liquid level (20) during refilling of the storage vessel (10), and the other measuring electrode (80'') is a probe for reading the brine level after emptying of the metering chamber (18).

11. Device according to one of the claims 3 to 10, characterised in that the electrodes (80, 80', 80'') are arranged in an electrode housing (82), communicating with the brine area of the storage vessel and sealed to avoid entry of solid salt particles.

12. Device according to claim 11, characterised in that the electrode housing (82) is arranged at the topside of the lid of the metering chamber (18).

13. Device according to claim 12, characterised in that the ventilating- and bleeding pipe (78) extends through the electrode housing (82).

14. Device according to one of the claims 1 to 13, characterised in that the extraction pipe (58) coming from the metering chamber (18) is connected with the intake chamber (100) of an injector (102) which is loaded on the input side (104) with pressurised water and on the output side (116) leading, preferably via a backflow stop, to the ion exchanger, and that a bypass pipe (118) with adjustable flow cross-section is arranged between the injector outlet (116) and the intake chamber (100).

15. Device according to claim 14, characterised in that a suction adjustable valve, preferably a conical valve (120), is arranged in the bypass pipe.

16. Device according to claim 14 or 15, characterised in that the flow cross-section in the bypass pipe (118) is manually or automatically controllable based on the static liquid pressure at the injector outlet (116) or the pressure difference between the injector inlet (104) and the injector outlet or the suction volume in the extraction pipe (58).

**Revendications**

1. Dispositif pour le réglage de la quantité de saumure lors de la régénération d'échangeurs d'ions, équipé d'un réservoir pour la saumure, lequel après vidange peut automatiquement être à nouveau rempli par l'intermédiaire d'un réglage de niveau, et d'une chambre de dosage qui, montée au-dessous du niveau du liquide dans le réservoir et susceptible d'être alimentée en samure par l'intermédiaire d'une ouverture d'entrée disposée dans son fond ou au voisinage de celui-ci, peut être fermée avec un couvercle et mise en communication avec l'échangeur d'ions par l'intermédiaire d'une ouverture de sortie pouvant être fermée, caractérisé en ce que la chambre de dosage (18) présente sur son couvercle ou au voisinage de celui-ci un tube d'aération et de purge (78) qui s'étend au-delà du niveau (20) du liquide et s'ouvre sur l'atmosphère, et en ce que la chambre de dosage peut, lorsque l'ouverture d'entrée (36) est ouverte, être remplie de saumure jusque dans la région du tube d'aération et de purge (78) sous la seule action de la pression statique du liquide dans le réservoir (10) et, lorsque l'ouverture d'entrée (36) est fermée, être vidée par l'intermédiaire d'un appareil d'aspiration (102) communiquant avec l'ouverture de sortie.

2. Dispositif selon la revendication 1, caractérisé en ce que la chambre de dosage (18) est disposée à l'intérieur du réservoir (10).

3. Dispositif selon la revendication 1 ou 2, caractérisé en ce que le réservoir (10) est divisé, par un filtre ou tôle perforée (12) disposé au-dessous du niveau (20) du liquide et pouvant être chargé de sel soluble dans l'eau, de préférence de sel de cuisine, en une partie supérieure de dissolution (14) et une partie inférieure à saumure (16), en ce que de la saumure peut être amenée à partir de la partie inférieure à saumure (16), de préférence en passant par un autre filtre, à l'ouverture d'entrée (36, 40) de la chambre de dosage et en ce qu'un supplément d'eau peut être introduit dans le réservoir (10) par l'intermédiaire d'un réglage de niveau automatique.

4. Dispositif selon l'une quelconque des revendications précédentes, caractérisé en ce que l'ouverture d'entrée (36) de la chambre de dosage (18) peut être fermée par une valve dont l'obturateur (34) est relié rigidement à l'obturateur (76) d'une autre valve (72, 76) montée dans le passage (44, 46) entre l'ouverture de sortie (38) et un conduit d'aspiration (58) menant à l'appareil d'aspiration (102), et en ce que les obturateurs (34, 76) peuvent être actionnés par un piston de manoeuvre (60) qui, monté dans cylindre (44, 52), peut être soumis sélectivement à l'action d'eau sous pression de préférence par l'intermédiaire du conduit d'aspiration (58) et peut ainsi être déplacé, à l'encontre de la force d'un ressort (64), dans le sens d'ouverture de la valve d'entrée (34, 36) et dans le sens de fermeture de la valve de sortie (72, 76) ou, sous l'action d'une pression d'aspiration plus basse, par la force du ressort (64) dans la position de fermeture de la valve d'entrée (34, 36) et dans la position d'ouverture de la valve de sortie (72, 76).

5. Dispositif selon la revendication 4, caractérisé en ce que le piston de manoeuvre (60) présente un trou de passage (50, 46) conduisant à partir du cylindre (52) vers l'ouverture de sortie (38) de la chambre de dosage (18) et pouvant être fermé, lors du coulissement du piston de manoeuvre (60) à l'encontre de la force du ressort (64), par la valve de sortie (72, 76).

6. Dispositif selon la revendication 4 ou 5, caractérisé en ce que le cylindre (52) est disposé au-dessous de l'ouverture d'entrée (36) et de l'ouverture de sortie (38) de la chambre de dosage (18), et présente une ouverture (54) qui, disposée au-dessous du piston de manoeuvre (60) dans le fond du cylindre et conduisant au conduit d'aspiration (58), peut être fermée par un obturateur (66), de préférence en forme de bille, susceptible de flotter dans la saumure.

7. Dispositif selon l'une quelconque des revendications précédentes, caractérisé en ce que l'ouverture d'entrée (36) est disposée centralement dans le fond de la chambre de dosage cylindrique (18) et en ce que l'ouverture de sortie (38) entoure l'ouverture d'entrée (36) sous la forme d'un anneau.

8. Dispositif selon l'une quelconque des revendications précédentes, caractérisé en ce que la chambre de dosage (18) présente dans son fond une tubulure (22) à laquelle peut être fixée, de préférence vissée ou bridée, une robinetterie contenant une ouverture d'entrée (36) et une ouverture de sortie (38) avec les valves correspondantes (34; 72, 76), le cylindre (44, 52) avec le piston de manoeuvre (60), le ressort (64) et l'obturateur (66), ainsi qu'un raccord (56) pour le conduit d'aspiration (58).

9. Dispositif selon l'une quelconque des revendications précédentes, caractérisé en ce que le tube d'aération et de purge (78) peut être plongé avec son ouverture inférieure d'en haut dans la chambre de dosage (18).

10. Dispositif selon l'une quelconque des revendications 3 à 9, caractérisé en ce qu'à des fins de réglage de niveau il plonge d'en haut dans le réservoir (10) trois électrodes (80, 80', 80") dont celle (80) immergée le plus profondément est réalisée en tant qu'électrode de référence et les deux autres électrodes (80', 80") immergées à des profondeurs différentes sont réalisées en tant qu'électrodes de mesure destinées à déterminer un passage de courant à l'électrode de référence, l'électrode de mesure (80') présentant la plus faible profondeur d'immersion constituant une sonde pour la reconnaissance du niveau supérieur (20) du liquide lors d'un nouveau remplissage du réservoir (10) et l'autre électrode de mesure (80") constituant une sonde pour la reconnaissance du niveau de sel après le vidage de la chambre de dosage (18).

11. Dispositif selon l'une quelconque des revendications 3 à 10, caractérisé en ce que les électrodes (80, 80', 80") sont disposées dans une enveloppe à électrodes (82) communiquant avec la région à saumure du réservoir et fermée pour l'accès de particules de sel solides.

12. Dispositif selon la revendication 11, caractérisé en ce que l'enveloppe à électrodes (82) est montée sur le dessus du couvercle de la chambre de dosage (18). ·

13. Dispositif selon la revendication 12, caractérisé en ce que le tube d'aération et de purge (78) s'étend à travers l'enveloppe à électrodes (82).

14. Dispositif selon l'une quelconque des revendications précédentes, caractérisé en ce que le conduit d'aspiration (58) s'étendant à partir de la chambre de dosage (18) est raccordé à la chambre d'aspiration (100) d'un injecteur (102) soumis du côté de son entrée (104) à de l'eau sous pression et conduisant du côté de sa sortie (116) de préférence par l'intermédiaire d'un clapet anti-retour (112) vers l'échangeur d'ions, et en ce qu'une dérivation (118) à section d'écoulement réglable est disposée entre la sortie (116) de l'injecteur et la chambre d'aspiration (100).

15. Dispositif selon la revendication 14, caractérisé en ce que dans la dérivation est montée une valve, de préférence une soupape à bille (120), réglable dans sa course.

16. Dispositif selon la revendication 14 ou 15, caractérisé en ce que la section d'écoulement dans la dérivation (118) est réglable manuellement ou automatiquement en fonction de la pression statique du liquide à la sortie (116) de l'injecteur ou en fonction de la différence de pression entre l'entrée (104) et la sortie de l'injecteur ou en fonction de la capacité d'aspiration dans le conduit d'aspiration (58).

## Fig. 1

*Fig. 2*